(19) Europäisches Patentamt
European Patent Office
Office européen des brevets

(11) **EP 4 386 431 A1**

(12) **EUROPEAN PATENT APPLICATION**

(43) Date of publication:
**19.06.2024 Bulletin 2024/25**

(21) Application number: **22213990.9**

(22) Date of filing: **15.12.2022**

(51) International Patent Classification (IPC):
**G01S 7/481** (2006.01)   **G01S 7/4915** (2020.01)
**G01S 17/36** (2006.01)   **G01S 17/42** (2006.01)
**G01S 17/88** (2006.01)   *G01S 7/497* (2006.01)

(52) Cooperative Patent Classification (CPC):
**G01S 7/4812; G01S 7/4915; G01S 17/36;**
**G01S 17/42; G01S 17/88;** G01S 2007/4975

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Mettler-Toledo GmbH**
**8606 Greifensee (CH)**

(72) Inventor: **Sorensen, Einar**
**1263 Oslo (NO)**

(74) Representative: **Mettler-Toledo**
**IP Department**
**Im Langacher 44**
**8606 Greifensee (CH)**

(54) **METHOD FOR DIAGNOSING ERRONEOUS DISTANCE MEASUREMENT OF A LASER RANGEFINDER UNIT, LASER RANGEFINDER UNIT AND COMPUTER PROGRAM**

(57)    The present invention relates to a method for diagnosing erroneous distance measurement of a laser rangefinder unit 1, 105-109 due to pollution, in particular in the field of product dimensioning. The method comprises a step of transmitting a continuous laser light beam 7 onto a detection surface 20 by operation of a laser transmitting unit 4 of the laser rangefinder unit, a step of receiving by a radiation sensor unit 5 of the laser rangefinder unit a superposition of laser light reflected from the detection surface 20 and laser light reflected from a polluted region 30 in the path of the laser light beam 7, a step of determining a phase difference between a reference phase and a phase of the laser light received to thereby derive a signal indicative of an influence of the laser light reflected from the polluted region 30 on the phase difference, and a step of diagnosing erroneous distance measurement due to pollution when said signal is in fulfillment of a failure criterion. The invention relates further to a laser rangefinder unit and a computer program for carrying out said method.

Fig. 3

EP 4 386 431 A1

**Description**

The present invention is related to a method for diagnosing erroneous distance measurement of a laser rangefinder unit due to pollution, in particular in the field of product dimensioning. Furthermore, the present invention is related to a laser rangefinder unit and a computer program for carrying out said method.

Laser rangefinder units are configured for distance measurements and have a plurality of applications, including measuring distances, velocities and dimensioning. The technique of using laser rangefinder units for distance measurement is also known as LIDAR (light detection and ranging).

Product dimensioning involves the estimation of the amount of space a shipping object will occupy in a trailer or warehouse. To this end, a laser rangefinder unit may be used to create, on the basis of measured distances to an object, a 3D point cloud picture of the object, and the 3D point cloud may be used to calculate the dimension of said object.

A laser rangefinder unit generally comprises a laser transmitting unit and a radiation sensor unit. Possible implementations of laser rangefinder unit may, for example, be based on time-of-flight or phase shift measurements. In an implementation of a laser rangefinder unit based on phase shift, this implementation being usually used for product dimensioning, the laser transmitting unit may be operative to transmit a continuous laser light beam onto a detection surface, and said radiation sensor unit may be configured to receive a reflected portion of the laser light beam, wherein, under ideal conditions, the reflected portion is or is at least to a very large component laser light reflected at the detection surface. Then, the laser rangefinder unit may be operative to determine a phase difference between the phase of the transmitted laser light (reference phase) and the phase of the received laser light, and to derive a distance value for the detection surface in accordance with said phase difference. For product dimensioning, laser rangefinder units based on phase shift measurement have generally a better resolution, lower noise and higher accuracy than laser rangefinder units based on time-of-flight measurement.

Laser rangefinder units, for example when used for product dimensioning, may be operated in a dirty environment which is polluted, e.g., by dust, exhaust fumes, etc. Then, a polluted region may have formed in the path of the transmitted laser light beam, e.g., due to exhaust gas particles of vehicles or dust particles that accumulate on a window of a housing of the rangefinder unit or due to a cloud of pollution particles floating in the air. It has been observed that a distance measurement with a laser rangefinder unit operated in a polluted environment may result in erroneous distance values compared to the correct distance value which may be determined with the laser rangefinder unit in the absence of pollution.

The problem mentioned above is known in the art, and a plurality of possible solutions has been proposed in the past, in particular for laser rangefinder units operated with pulsed laser light beams. WO 2021/065998 A1 discloses a method for detecting dirt on the window of a laser rangefinder unit operated with a pulsed laser light beam. A histogram of the intensity of the pulsed laser light beam received from the window and/or the intensity of the laser light beam received from a target object is monitored. The histogram is compared to a reference histogram created with a rangefinder unit having a clean, non-degraded window.

US 9772399 B2 discloses a method wherein the intensity of a laser light pulse reflected from the window of a laser rangefinder unit is measured independently from the intensity of a laser light pulse reflected from an object to be measured. If the intensity of the window reflected pulse exceeds a threshold value, it is indicated that the window has to be cleaned.

US 2021/0223374 A1 discloses a method wherein time-of-flight of a reflected laser light beam is measured and compared with a threshold time to determine whether the detected laser light is laser light reflected from the window. As there may always be some light reflected from the window, even in a clean state, an amplitude of the received backscattered laser light is measured as well and compared to a minimum threshold amplitude. If the amplitude is larger than the minimum threshold amplitude, a pollution of the window is diagnosed.

In the method disclosed in US 11061121 B2, a 3D camera device measures the time-of-flight of a light beam reflected from dirt on a window of the camera device and determines the presence of dirt from the magnitude of the reflected light.

EP 3914932 A1 discloses a method wherein it is determined whether a particular section of a housing of a rangefinder unit operated with a pulsed laser light beam is occluded based on predetermined characteristics of an object scanned by the particular section.

The methods above are all adapted to laser rangefinder units operated with pulsed laser light beams and require to discriminate between the laser light reflected from the window and the laser light reflected from the object to be measured.

In CN 111429400 B the distance of a plurality of objects within a scene from the origin of a rangefinder coordinate system is determined from point cloud data created by the rangefinder system. When the measured distance for a certain object is approximately the distance to the window the presence of dirt/an obstacle on the window is diagnosed. This method requires the analysis of the complete point cloud data and is thus computationally costly.

In view of these problems in the prior art, it is an object of the present invention to provide a reliable method for diagnosing erroneous distance measurement of a phase shift based laser rangefinder unit due to pollution which is easy to implement and to further provide a laser rangefinder unit and a computer program configured to carry out a said method.

The invention bases on the insight that it is possible to derive a signal that is indicative of an influence of the laser light reflected from a polluted region on the phase difference determined by a phase shift based laser rangefinder unit, and hence on the distance, height and dimension derived from the phase difference, wherein there is no need for additional installations, for amendments to the laser rangefinder unit, or for an operation mode of the laser rangefinder unit that is not implemented by default on stated-of-the-art phase shift based laser rangefinder units. In particular, there is only need to carry out a routine distance measurement when no product to be dimensioned is in the scanning range of the laser rangefinder unit.

According to a first aspect of the present invention there is provided a method for diagnosing erroneous distance measurement of a laser rangefinder unit due to pollution, said laser rangefinder unit comprising a laser transmitting unit operative to transmit a continuous laser light beam onto a detection surface, and a radiation sensor unit arranged to receive a superposition of laser light reflected from said detection surface and laser light reflected from a polluted region in the path of said laser light beam, said method comprising:

A step of transmitting said laser light beam onto said detection surface by operation of the laser transmitting unit.

A step of determining a phase difference between a reference phase and a phase of the laser light received by said radiation sensor unit to thereby derive a signal indicative of an influence of said laser light reflected from said polluted region on the phase difference.

A step of diagnosing erroneous distance measurement due to pollution when said signal indicative of the influence of pollution is in fulfillment of a failure criterion.

The continuous laser light beam transmitted by the laser transmitting unit may be a modulated laser light beam. The modulated laser light beam may comprise a pattern of several frequencies and amplitudes in one example.

In an embodiment, the detection surface is a flat surface. In one example, the detection surface may be a surface of a floor, in particular a horizontal floor, such as a surface of a floor of a warehouse.

The detection surface may be understood as a reference surface for diagnosing erroneous distance measurement in one example.

The laser rangefinder unit may be arranged at a fixed distance from said detection surface in one example. E.g., the laser rangefinder unit may be mounted on a wall or a stationary support of the warehouse above the floor surface.

The laser rangefinder unit is arranged such that the laser light transmitted by the laser transmitting unit is incident on the detection surface. The laser light is reflected at the detection surface, and a portion of the reflected laser light is received by the radiation sensor unit. For a distance measurement, a phase difference between a reference phase and a phase of the laser light received by the radiation sensor unit is determined. In an embodiment, the reference phase is the phase of the transmitted laser light. In one example, the reference phase is the phase of the transmitted laser light at the initial time of transmission. Ways to determine the phase difference are known in the art. A distance value may then be calculated on the basis of the determined phase difference.

The polluted region may be located between the detection surface and the laser transmitting unit in one example. In other words, the distance of the polluted region from the laser rangefinder unit may be smaller than the distance of the detection surface from the laser rangefinder unit.

The polluted region may include a polluted surface or polluted air in one example, but it is not limited to this. The polluted region is such that it reflects laser light incident thereupon.

The laser light reflected from the polluted region may have an influence on the determined phase difference compared to a case where the polluted region is absent, i.e., the phase difference may change compared to the case where pollution is absent. In one example, the reflection of the laser light from the polluted region may be predominantly due to diffuse scattering.

The influence of the pollution on the phase difference may be understood from a simple example where it is assumed that the transmitted laser light comprises a fixed frequency sinus shaped wave, e.g., $E \sin(2\pi f t)$, with E being an amplitude, f being the frequency and t being the time. The laser light reflected from the detection surface and received by the radiation sensor unit may be described as $A \sin(2\pi f t + \theta_1)$, wherein A is an amplitude and $\theta_1$ is a first phase shift. The laser light reflected from the polluted region and received by the radiation sensor unit may be described by $B \sin(2\pi f t + \theta_2)$ wherein B is an amplitude and $\theta_2$ is a second phase shift. The first phase shift and the second phase shift are different from each other as the polluted region and the detection surface have a different distance to the laser rangefinder unit. Then, the superposition of the laser light reflected from the detection surface and the laser light reflected from the polluted region is a sinus-shaped wave with amplitude K and phase shift $\theta_3$ given by

$$K \sin(2\pi f t + \theta_3) = A \sin(2\pi f t + \theta_1) + B \sin(2\pi f t + \theta_2)$$

where $K = \sqrt{A^2 + B^2 + 2AB\cos(\theta_1 + \theta_2)}$ and $\theta_3$ = arccos(($A\cos(\theta_1) + B\cos(\theta_2)$)//$K$). Thus, the larger the amplitude B of the laser light which is reflected from the polluted region and received by the radiation sensor unit the larger the effect on the phase difference between the phase $\theta_3$ of the laser light received by the radiation sensor unit and the reference phase. It is an insight of the invention that the amplitude B depends not only, e.g., on the reflectivity of the polluted region which is, e.g., determined by the amount of pollution, but also on the arrangement of the laser transmitting unit and the radiation sensor unit with respect to each other and the angle under which the laser light beam is incident on the pollution. This dependence leads to an influence on the phase difference measured by the range finder unit, and hence on any value derived thereof, such as a distance, dimension or height value, that is characteristic for an influence by pollution and that can be derived from the measured phase difference or the value derived thereof. In particular, the influence on the phase difference depends on the transmission angle, this means the angle under which the laser light beam is transmitted by the laser transmitting unit of the rangefinder unit. In contrast to this, it was observed that error situations that are different from back reflection due to pollution, such as misalignment of the laser rangefinder unit or the laser transmitting unit, do not result in the dependence on the transmission angle as observed in the error situation caused by pollution. It was observed that such different error situations usually lead to an offset only, this means no angle-dependence.

If, for example, a height profile generated by the laser rangefinder unit is considered, the error caused by pollution peaks at the angel under which the laser light beam is transmitted that leads to a laser light beam back reflected by the pollution that coincides with the detection axis of the radiation sensor unit.

Usually, the height profile is assessed in dependence on spatial positions (locations), in particular in dependence on at least one axis of a (usually Cartesian) coordinate system (e.g., rangefinder coordinate system), rather than in dependence on the transmission angle. In this case, the error caused by pollution peaks at the position (location) that corresponds to the transmission angle that leads to a laser light beam back reflected by the pollution that coincides with the detection axis of the radiation sensor unit.

Therefore, the above-mentioned failure criterion may depend on the measurand from which the signal indicative of an influence of the laser light reflected from the polluted region on the phase difference is derived and it may be or comprise, for example:

- The observation of an angle-dependence, wherein the angle is the transmission angle, this means the angle under which the laser light beam is transmitted by the laser transmitting unit.

- The observation of a non-linear dependence of the signal on spatial positions (locations), in particular on positions along a scan line, or on the transmission angle.

- The observation of a peak in the signal. The peak may be a hump or a depression. A hump may be observed is observed if the signal comprises height information, for example. A depression may be observed for example if the signal comprises distance information, in particular distance information concerning the distance between a detection surface and the laser rangefinder unit.

As mentioned, the amplitude B of the laser light which is reflected from the polluted region and received by the radiation sensor unit depends also on the arrangement of the laser transmitting unit and the radiation sensor unit with respect to each other. Therefore, the concrete angle-dependence, non-linear behavior or peak position is known by knowing said relative arrangement. Therefore, it is not necessary that the signal is or is derived from a series of determined phase differences. Rather, it is possible to diagnose erroneous distance measurements from the determination of a single phase difference. However, in many embodiments, the signal is or is derived from a series of determined phase differences. This is because the series of phase difference can be determined by a routine operation of the laser rangefinder unit and because diagnosing becomes more reliable.

In an embodiment, the laser transmitting unit and the radiation sensor unit are arranged coaxially to each other to thereby share a common optical axis.

If, in addition, the signal is or is derived from transmitting the laser light beam in a fan-shaped sweep along a scan line extending over a detection surface, the above-mentioned peak in the signal indicative of an influence of the laser light reflected from the polluted region on the phase difference appears at the transmission angle or position at with the laser light beam falls onto the polluted region under an angle of incidence of 0°, the angle of incidence being defined with respect to a surface normal of a real or imaginary surface of the polluted region at the position of laser light beam incidence. This angle or position is in particular known if the polluted region is at a position that is fix with respect to the laser rangefinder unit, such as a window of a housing of the laser rangefinder unit.

Examples of signals indicative of an influence of the laser light reflected from the polluted region on the phase difference will be presented in more detail below.

The method according to the first aspect of the present invention allows to reliably diagnose erroneous distance measurement on the basis of the signal indicative of an influence of the laser light reflected from the polluted region on the determined phase difference. The method may be easily implemented with currently available laser rangefinder units. A sensitivity of the method may be controlled via the choice of the failure criterion.

In one embodiment of the method according to the first aspect of the present invention, said transmission of said laser light beam onto said detection surface may comprise transmitting said laser light beam in a fan-shaped sweep along a scan line extending over the detection surface. Such a transmission of the laser light may be useful for dimensioning applications.

In one example the detection surface used for diagnosing erroneous distance measurements may be a floor surface, in particular a horizontal floor surface.

The laser rangefinder unit may be arranged above said floor surface, the scan line may extend over said floor surface, wherein the floor surface may be the floor surface over which an object to be dimensioned may be transported, e.g., by a forklift truck, in a direction transverse to the scan line.

In another example, the detection surface used for diagnosing erroneous distance measurements may be a surface of a belt of a belt conveyor, in particular a horizontal surface of a belt or belt conveyor.

The scan line may extend in a direction transverse to the transport direction of the belt of the belt conveyor. Then, the method according to the first aspect of the present invention may be implemented when no object is transported through the scan line.

In an embodiment said signal indicative of the influence of pollution may be derived from a series of phase difference values that correspond to a series of locations along said scan line.

When the laser light beam is transmitted in the fan-shaped sweep along the scan line, the radiation sensor unit may receive laser light reflected from a series of locations along the scan line. The locations of the series of locations may be spaced apart from each other by some distance. Then, for each location of said series, a phase difference value corresponding to said location may be determined, and the signal indicative of the influence of pollution may be derived from said series of phase difference values. In other words, the method comprises, in an embodiment, transmitting said laser light beam in the fan-shaped sweep, wherein transmitting said laser light beam in a fan-shaped sweep comprises transmitting said laser light beam to a series of locations along the scan line, wherein the method comprises generating a series of phase difference values by determining a phase difference between a reference phase and a phase of the laser light received by said radiation sensor unit for each location of the series of locations, and wherein said signal is derived from the series of phase difference values.

In an embodiment of the method according to the first aspect of the present invention, said signal may be derived on the basis of first phase difference values corresponding to locations within a localized region of the scan line in which said first phase difference values are more strongly influenced by said pollution as compared to other phase difference values corresponding to regions of the scan line outside said localized region.

As disclosed above, the influence of pollution on the phase difference may depend on the transmission angle of the laser light beam throughout said sweep when the laser light beam is transmitted in a fan-shaped sweep along the scan line. As a consequence, the influence of pollution on the phase difference associated to a location along the scan line may be location-dependent. In particular, there may exist a localized region of the scan line so that first phase difference values corresponding to locations within said localized region are more strongly influenced by said pollution than other phase difference values corresponding to other locations outside said localized region. In one example, the other phase difference values may be influenced only very little or not at all by said pollution, and the pollution may only influence said first phase difference values. In one example, the localized region may be a region between a first point and a second point on the scan line, said first and second points being spaced apart from each other by some finite distance. In one example, the size of said localized region, e.g., said finite distance, may be much smaller than the size of the scan line, i.e., a distance between first and second endpoints of the scan line.

Laser rangefinder units may be used for distance measurements. Thus, in an embodiment of the method according to the first aspect of the present invention, said method may further comprise calculating for each of the locations of said series of locations a distance value on the basis of the determined phase difference value, and wherein deriving of said signal may be based on said distance values. When the distance values are output by the laser rangefinder unit as a result of a measurement, this output may also be used for diagnosing erroneous distance measurement. Even further, the failure criterion may be chosen in accordance with a desired accuracy for the distance measurement.

In an embodiment of the method according to the first aspect of the present invention, in particular in an embodiment comprising calculating for each of the locations of said series of locations a distance value, the method may further comprise calibrating the laser rangefinder unit such that a series of distance values calculated on the basis of phase difference values obtained by operation of the laser rangefinder unit in the absence of pollution is in accordance with a series of assigned reference values. In absence of pollution the polluted region is absent.

In one example, the series of assigned reference values may define a baseline curve in a rangefinder coordinate system, e.g., a straight line with zero slope. Then, a series of distance values calculated on the basis of phase differences obtained by operation of the laser rangefinder unit in the presence of pollution may define a pollution curve (also called error profile) in said rangefinder coordinate system which is different from the baseline curve. The signal indicative of the influence of pollution may then be derived via a curve comparison between the pollution curve and the baseline curve. The failure criterion may comprise a threshold for said curve comparison according to some measure of deviation.

In an embodiment where first phase difference values in the localized region are more strongly influenced by said pollution as compared to other phase difference values corresponding to regions of the scan line outside said localized region, the influence of pollution may be reflected in a localized peak in distance values corresponding to locations in said localized region. E.g., the pollution curve defined by the series of distance values calculated on the basis of the phase difference values determined by operation of the laser rangefinder unit in a polluted environment may exhibit a localized peak which is not present in a curve defined by a series of distance values calculated on the basis of phase difference values obtained in the absence of pollution.

Thus, according to another embodiment of the first aspect of the present invention, said signal indicative of the influence of pollution may be derived as a height value of a peak in said distance values corresponding to locations in said localized region, and said failure criterion may be fulfilled when said height value exceeds a threshold value.

As explained above, the peak may be a peak on said curve defined by said series of distance values. In one embodiment, said height value may be determined as a difference between a value on the peak and the assigned reference value at the corresponding location on said scan line. Preferably, said value on said peak is a maximum value. In another embodiment, said height value may be determined as a difference between the value on the peak and a distance value corresponding to a location outside said localized region.

In an embodiment of the method in which the laser light beam is transmitted in a fan-shaped sweep to a series of locations along the scan line, and that comprises generating a series of phase difference values by determining a phase difference between a reference phase and a phase of the laser light received by said radiation sensor unit for each location of the series of locations, and deriving the signal from the series of phase difference values, deriving the signal comprises determining, using the series of phase difference values, a height profile of the scan line and deriving an error profile from the height profile.

The height profile of the scan line may be determined in the same manner as scan lines of an object to be dimensioned are determined. In particular, the height profile may be given with respect to a rangefinder unit coordinate system, in particular a 3D, for example Cartesian, coordinate system in which one axis is a height axis, this means in which a value attributed to this axis represents a height of the object.

In an embodiment, the height profile is given by a 2D point cloud.

The error profile represents the influence of error situations present at the time of generating the series of phase difference values. In other words, the error profile comprises contributions from sources that may contribute to erroneous distance measurements, such as pollution, misalignment of the laser rangefinder unit and misalignment of laser transmitting unit. As pointed out above, erroneous distance measurement due to pollution can be diagnosed from such an error profile due to the characteristic dependence of an error profile comprising a significant contribution of erroneous distance measurement due to pollution on the series of locations (or the series of transmission angles, as the case may be).

In an embodiment, the error profile is the signal, and the method comprises determining whether the error profile shows a linear behavior or not, wherein the failure criterion is a non-linear behavior.

In particular, the whole range spanned by the series of locations may be considered during determining whether the error profile shows a linear behavior or not.

A linear behavior means that the error profile can be approximated by a function of the kind $h(x) = ax + b$, wherein $a$ and $b$ are constants.

In particular, determining whether the error profile shows a linear behavior or not may comprise determining whether the error profile comprises a peak.

In an embodiment, deriving an error profile from the height profile comprises determining a difference between the height profile and a target height profile.

The target height profile may be a height profile of the scan line, this height profile being generated in absence of any potential sources that may contribute to erroneous distance measurements.

For example, the target height profile may be determined immediately after setting-up, in particular calibrating, the laser rangefinder unit.

The target height profile may comprise or be the series of assigned reference values.

In an embodiment in which the error profile is the signal, and the method comprises determining whether the error profile shows a linear behavior or not, wherein the failure criterion is a non-linear behavior, the scan line extends over the horizontal floor surface or the horizontal surface of a belt (conveyor) mentioned above. In this case, the target height profile is a height profile having a constant height, this means $h(x) = b$, wherein $b$ may be zero $(b = 0)$.

In particular in this case, the error profile corresponds to the height profile and an erroneous distance measurement due to pollution can be diagnosed by determining whether the height profile has a constant height or not.

Optionally, the method may comprise determining whether a misalignment may cause erroneous distance measurement by determining whether there is a constant offset of the height profile with respect to the target height profile having a constant height.

In one embodiment of the first aspect of the present invention, said laser rangefinder unit may comprise a housing having a window which is at least partially transparent for the laser light transmitted by the laser transmitting unit, said laser transmitting unit and said radiation sensor unit may be arranged inside said housing and said polluted region may comprise a dirty region of the window of the housing. The window is in the path of the laser light from the laser transmitting unit to the detection surface, and from the detection surface to the radiation sensor unit. When erroneous distance measurement is diagnosed in this embodiment, the window may be cleaned to thereby remove the polluted region.

In embodiments in which the polluted region comprises a dirty region of the window of the housing, the signal indicative of an influence of the laser light reflected from the polluted region on the phase difference and the failure criterion may be according to any embodiment disclosed.

In an embodiment of the method in which the laser transmitting unit and the radiation sensor unit are arranged inside the housing having a potentially polluted window, the laser transmitting unit and the radiation sensor unit may be arranged coaxially to each other to thereby share a common optical axis. When said arrangement is used in a configuration of a laser rangefinder unit in which the laser light beam is deflected in a fan-shaped sweep along the detection surface, and is thereby deflected in a sweep across said window, the localized region of strong influence of the pollution on the phase difference may comprise a first location of the scan line, said first location being a location of incidence of laser light on the detection surface, said laser light having been incident on the window, upon transmission by the laser transmitting unit, at an angle of incidence of approximately zero degree, the angle of incidence being defined with respect to a surface normal of the surface of the window.

Independent of the concrete realization of the method according to the first aspect of the present invention, said laser rangefinder unit may further comprise a controller, and said determining of the phase difference according to any embodiment disclosed and/or said deriving of said signal according to any embodiment disclosed and/or said calculation of distance values according to any embodiment disclosed and/or said diagnosing of erroneous distance measurement according to any embodiment disclosed may be implemented by the controller, preferably by electronic data processing.

According to a second aspect of the present invention, there is provided a laser rangefinder unit, said laser rangefinder unit comprising a laser transmitting unit, a radiation sensor unit and a controller.

The laser transmitting unit is operative, by control of the controller, to transmit a continuous laser light beam onto a detection surface In particular, the laser transmitting unit may be operative, by control of the controller, to transmit a continuous laser light beam onto a detection surface according to any embodiment disclosed with respect to the first aspect of the invention.

The radiation sensor unit is arranged to receive a superposition of laser light reflected from the detection surface and laser light reflected from a polluted region in the path of said laser light beam. In particular, the radiation sensor unit may be arranged according to any embodiment disclosed with respect to the first aspect of the invention

The controller is operative, to determine, preferably by electronic data processing, a phase difference between a reference phase and a phase of the laser light received by said radiation sensor unit to thereby derive a signal indicative of an influence of said laser light reflected from said polluted region on the phase difference, and to diagnose erroneous distance measurement due to pollution, preferably by electronic data processing, when said signal indicative of the influence of pollution is in fulfillment of a failure criterion. In particular, the phase difference may be and/or determined, the signal may be and/or derived, and diagnosing may be according to any embodiment disclosed with respect to the first aspect, and the controller may be configured accordingly.

In particular, the laser rangefinder unit according to the second aspect of the present invention is configured to carry out the method according to the first aspect of the present invention according to any embodiment disclosed. Everything that has been said above in relation to the method according to the first aspect of the present invention also applies to the laser rangefinder unit according to the second aspect of the present invention.

According to a third aspect of the present invention, there is provided a computer program for diagnosing erroneous distance measurement of a laser rangefinder unit due to pollution, said laser rangefinder unit comprising a laser transmitting unit operative to transmit a continuous laser light beam onto a detection surface, and a radiation sensor unit arranged to receive a superposition of laser light reflected from said detection surface and laser light reflected from a polluted region in the path of the laser light beam, said computer program comprising instructions which, when the computer program is executed by a computer, cause the computer to carry out the following steps:

A step of deriving a signal indicative of an influence of said laser light reflected from said polluted region on a phase difference, wherein the signal is derived from a determined phase difference between a reference phase and a phase of the laser light received by the radiation sensor unit, a height value derived from said phase difference, or a distance value derived from said phase difference. In particular, the signal may be and/or derived according to any embodiment disclosed with respect to the first and second aspects.

A step of diagnosing erroneous distance measurement due to pollution when said signal indicative of the influence of pollution is in fulfillment of a failure criterion. In particular, diagnosing may be according to any embodiment disclosed with respect to the first and second aspects.

In particular, the computer program according to the third aspect of the present invention is configured to be used for the laser rangefinder unit according to the second aspect of the present invention and for the method according to the first aspect of the present invention, in particular for carrying out the method on the laser rangefinder unit. Everything that has been said above in relation to the method according to the first aspect of the present invention also applies to the computer program according to the third aspect of the present invention.

In an embodiment, the computer program comprises further instructions which, when the computer program is executed by a computer, cause the computer to carry out a step of determining a phase difference between a reference phase and a phase of the laser light received by the radiation sensor unit to thereby derive the signal indicative of an influence of said laser light reflected from said polluted region on the phase difference. The phase difference may be and/or determined according to any embodiment disclosed with respect to the first and second aspects.

In other words, the computer program comprises instructions which, when the computer program is executed by a computer, cause the computer to carry out the step of deriving a signal indicative of an influence of said laser light reflected from said polluted region on a phase difference according to any embodiment disclosed with respect to the first and second aspect of the invention, the step of diagnosing erroneous distance measurement due to pollution according to any embodiment disclosed with respect to the first and second aspect of the invention, and, optionally, the step of determining a phase difference between a reference phase and a phase of the laser light received by said radiation sensor unit according to any embodiment disclosed.

The invention concerns further, a reproducible computer-readable signal encoding the computer program that, when loaded and executed on a computer, causes the computer to carry out the step of deriving a signal indicative of an influence of said laser light reflected from said polluted region on a phase difference according to any embodiment disclosed with respect to the first and second aspect of the invention, the step of diagnosing erroneous distance measurement due to pollution according to any embodiment disclosed with respect to the first and second aspect of the invention, and, optionally, the step of determining a phase difference between a reference phase and a phase of the laser light received by said radiation sensor unit according to any embodiment disclosed.

The invention concerns further a computer-readable medium having stored thereon instruction which, when executed by a computer cause the computer to carry out the step of deriving a signal indicative of an influence of said laser light reflected from said polluted region on a phase difference according to any embodiment disclosed with respect to the first and second aspect of the invention, the step of diagnosing erroneous distance measurement due to pollution according to any embodiment disclosed with respect to the first and second aspect of the invention, and, optionally, the step of determining a phase difference between a reference phase and a phase of the laser light received by said radiation sensor unit according to any embodiment disclosed.

The invention concerns further a data carrier signal carrying instructions which, when executed by a computer, cause the computer to carry out the step of deriving a signal indicative of an influence of said laser light reflected from said polluted region on a phase difference according to any embodiment disclosed with respect to the first and second aspect of the invention, the step of diagnosing erroneous distance measurement due to pollution according to any embodiment disclosed with respect to the first and second aspect of the invention, and, optionally, the step of determining a phase difference between a reference phase and a phase of the laser light received by said radiation sensor unit according to any embodiment disclosed.

The invention concerns further a method for manufacturing a non-transitory computer readable medium, comprising the step of storing, on the computer readable medium, computer-executable instruction which, when executed by a processor of a computing system, cause the computing system to perform the step of deriving a signal indicative of an influence of said laser light reflected from said polluted region on a phase difference according to any embodiment disclosed with respect to the first and second aspect of the invention, the step of diagnosing erroneous distance measurement due to pollution according to any embodiment disclosed with respect to the first and second aspect of the invention, and, optionally, the step of determining a phase difference between a reference phase and a phase of the laser light received by said radiation sensor unit according to any embodiment disclosed.

In the following description, the invention will be described in greater detail by way of example with reference to the drawings. In the drawings,

Fig. 1    illustrates a simplified schematic representation of a working environment of a warehouse in which a method, laser rangefinder unit and computer program according to the present invention are applied;

Fig. 2    illustrates a schematic cross-sectional view of a laser rangefinder unit according to the second aspect of the present invention operated in a clean, non-polluted environment;

Fig. 3    schematically illustrates the laser rangefinder unit of Fig. 2 operated in a polluted environment; and

Fig. 4    illustrates a height profile obtained by the rangefinder unit shown in Fig. 3 which is operated in the polluted environment.

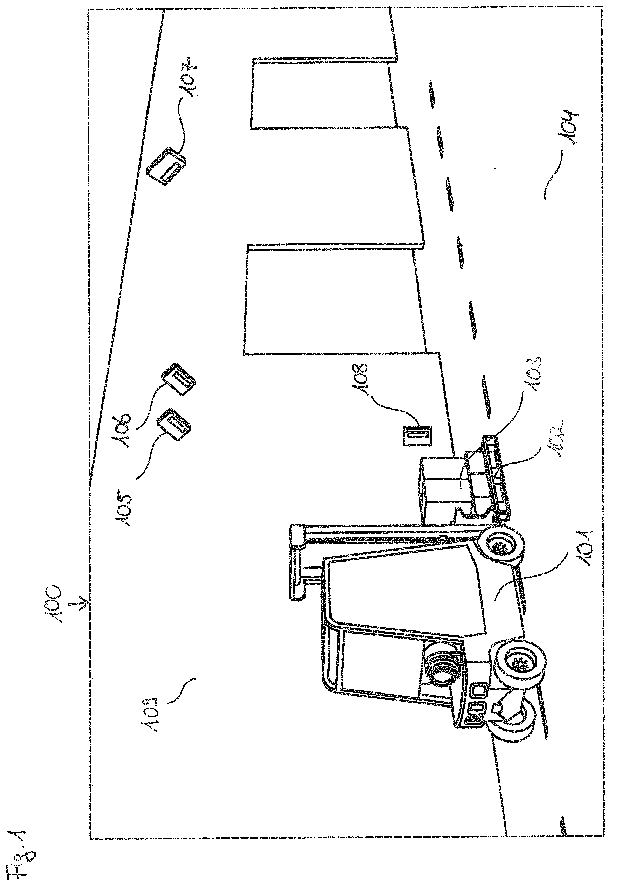

**Fig. 1** illustrates a simplified schematic representation of the working environment of a warehouse 100 in which the method, laser rangefinder unit and computer program according to the present invention may be applied. In Fig. 1, four laser rangefinder units 105, 106, 107, and 108 are mounted on a wall surface 109 of the warehouse 100. A package 103 which is an object to be measured by the laser rangefinder units 105, 106, 107, 108 is carried on a pallet 102 by a forklift vehicle 101 moving over a floor surface 104 of the warehouse 100, said floor surface 104 acting as a detection surface 20 in the embodiment shown.

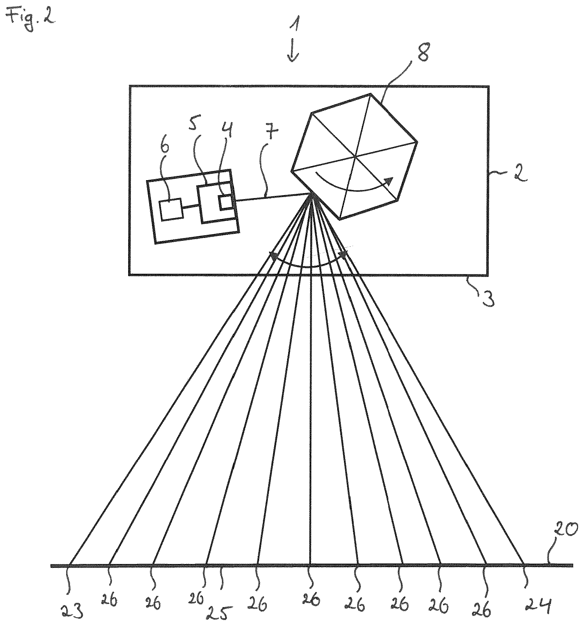

Each of the four laser rangefinder units 105, 106, 107, 108 is configured to transmit a continuous laser light beam 7 onto the detection surface 20 as is shown in Fig. 2. In one example, the four laser rangefinder units 105, 106, 107, 108 may be configured to transmit modulated laser light beams 7 in the visible spectrum preferably with frequencies in the range of 10 to 100 MHz. The laser rangefinder units 105, 106, 107, 108 may be configured to transmit visible modulated light beams 7, for example at a wavelength of 660 nm.

The forklift vehicle 101 may transport the package 103 in a direction of transport which is transverse to scan lines 25 (see Fig. 2) projected by the laser rangefinder units 105, 106, 107, 108 onto the detection surface 20. Thereby, distance values may be calculated by the laser rangefinder units 105, 106, 107, 108 based on laser light that is reflected from the package during its transport which allow to create a 3D point cloud image of the package 103. In this way, dimensioning may be performed.

**Fig. 2** illustrates a schematic cross-sectional view of the laser rangefinder unit 1 according to an embodiment of the second aspect of the present invention which is adapted to implement the method according to the first aspect of the present invention. The configuration of the laser rangefinder units 105, 106, 107, 108 may be identical with the configuration of the laser rangefinder unit 1.

As it is schematically illustrated in Fig. 2, the laser rangefinder unit 1 in this embodiment comprises a housing 2 with a window 3. A laser transmitting unit 4, a radiation sensor unit 5 and a controller 6 are arranged inside the housing 2.

The laser transmitting unit 4 is operative, by control of the controller 6, to transmit a continuous laser light beam 7. The laser light beam 7 may be a modulated laser light beam in one example. The window 3 is at least partially transparent for the transmitted laser light 7. Preferably, the window 3 is completely or almost completely transparent for the transmitted laser light.

The laser rangefinder unit 1 is further operative, by control of the controller 6, to deflect the laser light beam 7 transmitted through the window 3 of the housing 2 in a fan-shaped sweep from a first endpoint 23 to a second endpoint 24 along the scan line 25 extending over the detection surface 20. The detection surface 20 may, for example, be the floor surface 104 or the wall surface 109 of Fig. 1. To this end, the laser rangefinder unit 1 may comprise a rotating polygon mirror 8. However, the laser rangefinder unit 1 is not restricted to a configuration comprising the rotating polygon mirror 8.

In the embodiment shown in Fig. 2, the laser transmitting unit 4 and the radiation sensor unit 5 are arranged coaxially to each other to thereby share a common optical axis. The invention is, however, not limited to such an arrangement.

As one may take from Fig. 2, transmitting the laser light beam 7 in the fan-shaped sweep may comprise transmitting the laser light beam 7 to a series of locations 26 along the scan line 25.

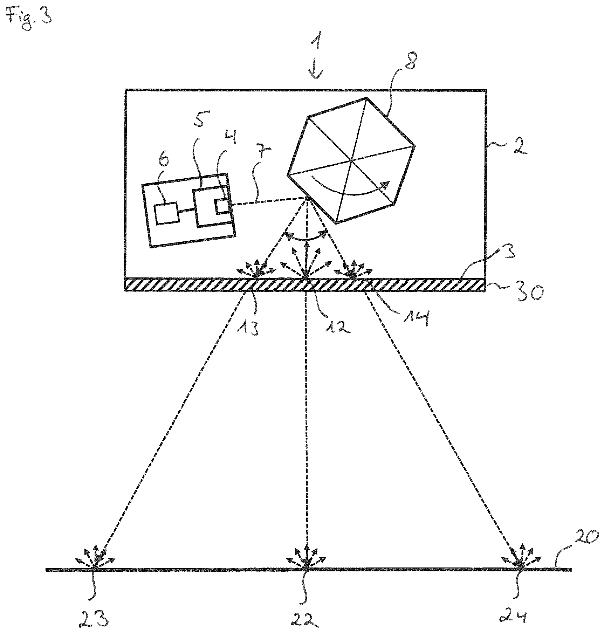

The radiation sensor unit 5 is arranged to receive a superposition of laser light reflected from the detection surface 20 and from a polluted region (not shown in Fig. 2, see Fig. 3) in the path of said laser light beam 7. The controller 6 is operative, preferably by electronic data processing, to determine a phase difference between a reference phase and a phase of the received laser light. When the radiation sensor unit 5 receives reflected laser light from each location 26 of the series of locations, the controller 6 may be configured to generate a series of phase difference values by determining a phase difference between a reference phase and a phase of the laser light received by said radiation sensor unit 5 for each location 26 of the series of locations. Then, the phase difference value associated with a location 26 may be indicative of a height value or a distance value associated with said location 26 in one example.

In one example, the controller 6 may be configured to determine, preferably by electronic data processing, and using the series of phase difference values, a height profile that may be indicative of a height of the detection surface 20. Additionally or alternatively, the laser rangefinder unit 1 may be configured to calculate, preferably by said controller 6, for each of the locations 26 of the series of locations a distance value on the basis of the series of determined phase difference values. Each distance value may be indicative of a distance between said location 26 and the laser rangefinder unit 1.

The laser rangefinder unit 1 shown in Fig. 2 may be calibrated. To this end, the laser rangefinder unit 1 may be operated in a clean, non-polluted environment, and calibration may be carried out so that the height profile or the series of distance values is in accordance with an assigned reference height profile, respectively in accordance with a series of assigned reference values.

**Fig. 3** schematically illustrates the laser rangefinder unit 1 shown in Fig. 2 when operated in a polluted environment. As an example, a polluted region in the form of a dirt layer 30 may have formed on the window 3 of the housing 2 of the laser rangefinder unit 1. However, in other scenarios, a polluted region may have formed at different locations in the optical path of the laser rangefinder unit 1, for example, as a dirt cloud between the window 3 and the detection surface 20.

As it is schematically illustrated in Fig. 3, in the presence of pollution laser light is not only reflected from the detection surface 20 (the reflection from three locations on the scan line 25, namely from said first and second endpoints 23, 24 and from a center point 22 is shown for illustrative purposes), but laser light is also reflected from the dirt layer 30 on said window 3 (the reflection from three locations 12, 13, 14 is shown for illustrative purposes in Fig. 3). In the example shown in Fig. 3, the reflection is illustrated to be diffusive. However, the invention is not limited to this.

The radiation sensor unit 5 is arranged to receive a superposition of the laser light reflected from said detection surface 20 and the laser light reflected from the dirt layer (polluted region) 30. The laser light reflected from said dirt layer 30 influences the phase of the received laser light and thereby the phase difference between the reference phase and the phase of the received laser light, as has been explained above in the general part of the description. In the example shown in Fig. 3, laser light reflected from the position 12 of the polluted region 30, wherein the laser light 7 is incident at an angle of incidence of 0° (the angle of incidence is defined with respect to a surface normal of a real or imaginary surface of the polluted region 30 at the position of incidence of the laser light), may influence the phase difference stronger than the laser light reflected from other positions of the polluted region 30, in particular positions 13 and 14, wherein the laser light 7 is incident at an angle of incidence which is larger than 0°.

The controller 6 is further operative, preferably by electronic data processing, to derive a signal indicative of the influence of the laser light reflected from said polluted region 30 on the phase difference.

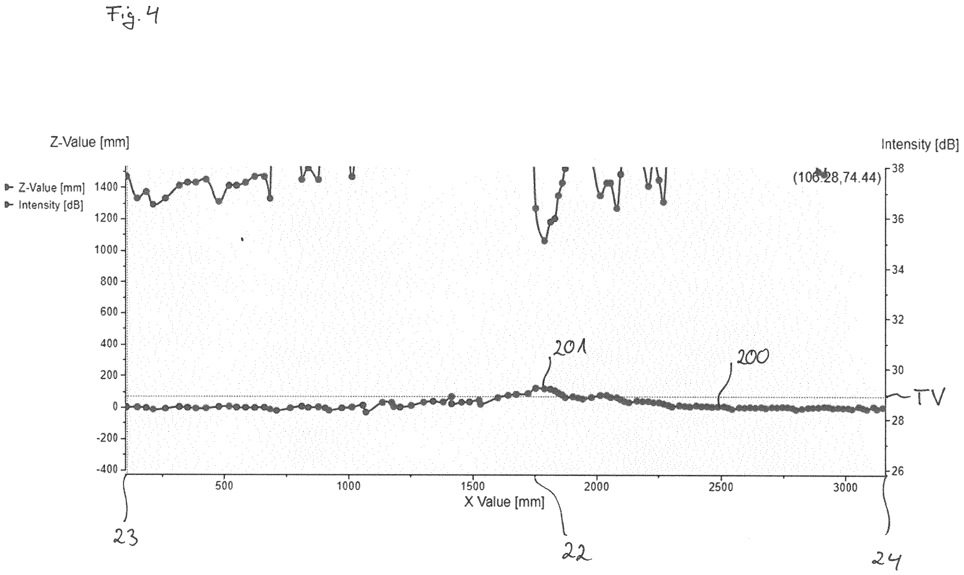

In one example, deriving said signal may comprise determining, using the series of phase difference values, a height profile 200 of the scan line and deriving an error profile from the height profile. **Fig. 4** is an illustration of such a height profile obtained in the presence of pollution. The height profile 200 is presented with respect to a coordinate system, wherein the X-axis represents the locations 26 along the scan line 25. A minimal X-value may be associated with the first endpoint 23 of the scan line 25 and a maximum X-value may be associated with the second endpoint 24 of the scan line 25. Each location 26 along the scan line 25 may be associated with a height value $Z(X)$. The laser rangefinder unit 1 may be calibrated such that in the absence of pollution the height value $Z(X)$ associated with each location 26 is zero. That is, the height profile in the absence of pollution is a straight line with zero slope through the origin, $Z(X) = 0$. The height profile in the absence of pollution may define a target height profile in some examples.

The height profile 200 shown in Fig. 4 may have been obtained by the laser rangefinder unit 1 when the dirt layer 30 is present on the window 3, as it is shown in Fig. 3. As one may take from Fig. 4, the height profile 200 shows a non-linear behaviour with a peak 201 for X-values corresponding to a localized region of the scan line 25.

In one example, the error profile may be derived by determining, preferably by said controller 6, a difference between the height profile 200 and the target height profile, and the signal may be the error profile. For the example shown in Fig. 4, each height value of the target height profile may be zero, and the error profile may be identical with the height profile. The controller 6 may be further operative, preferably by electronic data processing, to determine whether the error profile shows a linear behaviour or not. Erroneous distance measurement due to pollution may be diagnosed, preferably by the controller 6, when said signal is in fulfillment of a failure criterion, the failure criterion being the non-linear behaviour. For example, the controller 6 may be configured to determine whether the error profile (which is the height profile in the example) comprises the peak 201, in the present case a hump, by looking for height values $Z(X)$ that are above a threshold value TV, in particular in a localized region in the vicinity of X-values corresponding to a localized region of the scan line 25. As has been explained above, the influence of the laser light reflected from the polluted region on the phase difference may be strongest for laser light incident on the polluted region at an angle of incidence of 0°. As the position of the dirt layer 30 is fixed with respect to the laser rangefinder unit 1, this position is known. Thus, the localized region of the scan line where a peak is expected in the presence of pollution is also known.

In other embodiments, the signal may be derived on the basis of distance values associated with the locations 26 along the scan line 25, said signal may be derived as a height value of a peak in said distance values and said failure criterion may be fulfilled when the height value exceeds a threshold value.

List of Reference Numerals

| | |
|---|---|
| 1 | laser rangefinder unit |
| 2 | housing |

| | |
|---|---|
| 3 | window |
| 4 | laser transmitting unit |
| 5 | radiation sensor unit |
| 6 | controller |
| 7 | transmitted laser light beam |
| 8 | rotating polygon mirror |
| 12, 13,14 | locations on dirt window |
| 20 | detection surface |
| 22 | center point |
| 23 | first endpoint |
| 24 | second endpoint |
| 25 | scan line |
| 26 | locations along the scan line |
| 30 | dirt layer |
| 100 | warehouse |
| 101 | forklift vehicle |
| 102 | pallet |
| 103 | package (object to be measured) |
| 104 | floor surface |
| 105, 106, 107, 108 | laser rangefinder unit |
| 109 | wall surface |
| 200 | height profile |
| 201 | peak |
| TV | first threshold value |

**Claims**

1.  A method for diagnosing erroneous distance measurement of a laser rangefinder unit (1, 105-108) due to pollution, said laser rangefinder unit comprising a laser transmitting unit (4) operative to transmit a continuous laser light beam (7) onto a detection surface (20), and a radiation sensor unit (5) arranged to receive a superposition of laser light reflected from said detection surface and laser light reflected from a polluted region (30) in the path of said laser light beam, said method comprising:

    transmitting said laser light beam onto said detection surface by operation of the laser transmitting unit;
    determining a phase difference between a reference phase and a phase of the laser light received by said radiation sensor unit to thereby derive a signal indicative of an influence of said laser light reflected from said polluted region on the phase difference;
    diagnosing erroneous distance measurement due to pollution when said signal is in fulfillment of a failure criterion.

2.  Method according to claim 1, wherein said transmission of said laser light beam (7) onto said detection surface (20) comprises transmitting said laser light beam in a fan-shaped sweep along a scan line (25) extending over the detection surface (20).

3.  Method according to claim 2, wherein the detection surface (20) is a floor surface (104) or a surface of a belt or belt conveyor.

4.  Method according to claim 2 or 3, wherein transmitting said laser light beam (7) in a fan-shaped sweep comprises transmitting said laser light beam to a series of locations (26) along the scan line (25), wherein the method comprises generating a series of phase difference values by determining a phase difference between a reference phase and a phase of the laser light received by said radiation sensor unit (5) for each location of the series of locations, and wherein said signal is derived from the series of phase difference values.

5.  Method according to claim 4, wherein deriving said signal comprises determining, using the series of phase difference values, a height profile (200) of the scan line (25) and deriving an error profile from the height profile.

6.  Method according to claim 5, wherein the error profile is said signal and the method comprises determining whether the error profile shows a linear behavior or not, wherein the failure criterion is a non-linear behavior.

7. Method according to claim 5 or 6, wherein deriving an error profile from the height profile (200) comprises determining a difference between the height profile and a target height profile.

8. Method according to claim 4, wherein said method further comprises calculating for each of the locations of said series of locations (26) a distance value on the basis of the determined phase difference value, and wherein deriving of said signal is based on said distance values.

9. Method according to claim 8, wherein said method further comprises calibrating the laser rangefinder unit such that a series of distance values calculated on the basis of phase difference values obtained by operation of the laser rangefinder unit in the absence of pollution is in accordance with a series of assigned reference values.

10. Method according to one of claims 1-9, wherein said signal is derived on the basis of first phase difference values corresponding to locations within a localized region of the scan line (25) in which said first phase difference values are more strongly influenced by said pollution as compared to other phase difference values corresponding to regions of the scan line outside said localized region.

11. Method according to claim 10, comprising calculating for each of the first phase difference values a distance value, wherein said signal is derived as a height value of a peak (201) in said distance values corresponding to locations in said localized region, and said failure criterion is fulfilled when said height value exceeds a threshold value (TV).

12. Method according to claim 11, wherein said method comprises calibrating the laser rangefinder unit such that a series of distance values calculated on the basis of phase difference values obtained by operation of the laser rangefinder unit in the absence of pollution is in accordance with a series of assigned reference values, and wherein said height value is determined as a difference between a value on the peak and the assigned reference value at the corresponding location on said scan line (25).

13. Method according to one of claims 1-12, wherein said laser rangefinder unit comprises a housing (2) having a window (3) which is at least partially transparent for the laser light (7) transmitted by the laser transmitting unit (4), said laser transmitting unit (4) and said radiation sensor unit (5) being arranged inside said housing and said polluted region comprises a dirty region (30) of the window of the housing.

14. A laser rangefinder unit (1, 105-108), said laser rangefinder unit comprising a laser transmitting unit (4), a radiation sensor unit (5) and a controller (6),

   said laser transmitting unit being operative, by control of the controller, to transmit a continuous laser light beam (7) onto a detection surface (20),
   said radiation sensor unit being arrangeable to receive a superposition of laser light reflected from said detection surface and laser light reflected from a polluted region (30) in the path of said laser light beam,
   said controller being operative to determine, preferably by electronic data processing, a phase difference between a reference phase and a phase of the laser light received by said radiation sensor unit to thereby derive a signal indicative of an influence of the laser light reflected from said polluted region on the phase difference, and to diagnose erroneous distance measurement due to pollution, preferably by electronic data processing, when said signal is in fulfillment of a failure criterion.

15. A computer program for diagnosing erroneous distance measurement of a laser rangefinder unit (1, 105-108) due to pollution, said laser rangefinder unit comprising a laser transmitting unit (4) operative to transmit a continuous laser light beam (7) onto a detection surface (20), and a radiation sensor unit (5) arranged to receive a superposition of laser light reflected from the detection surface and laser light reflected from a polluted region (30) in the path of the laser light beam, said computer program comprising instructions which, when the computer program is executed by a computer, cause the computer to carry out the following steps:

   deriving a signal indicative of an influence of said laser light reflected from said polluted region on a phase difference, wherein the signal is derived from a determined phase difference between a reference phase and a phase of the laser light received by the radiation sensor unit, a height value derived from said phase difference, or a distance value derived from said phase difference;
   diagnosing erroneous distance measurement due to pollution when said signal indicative of the influence of pollution is in fulfillment of a failure criterion.

Fig.1

EP 4 386 431 A1

Fig. 2

Fig. 3

EP 4 386 431 A1

Fig. 4

Z-Value [mm]

Intensity [dB]

▷ Z-Value [mm]
▷ Intensity [dB]

(106.28,74.44)

Europäisches
Patentamt

European
Patent Office

Office européen
des brevets

# EUROPEAN SEARCH REPORT

Application Number

EP 22 21 3990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/033475 A1 (NAKAMURA MINORU [JP] ET AL) 30 January 2020 (2020-01-30) <br> * paragraph [0002] – paragraph [0003] * <br> * paragraph [0006] – paragraph [0008] * <br> * paragraph [0024] – paragraph [0046] * <br> * figures 1, 4 * <br> ----- | 1-9, 13-15 | INV. <br> G01S7/481 <br> G01S7/4915 <br> G01S17/36 <br> G01S17/42 <br> G01S17/88 |
| X | DE 11 2019 005749 T5 (AMS SENSORS SINGAPORE PTE LTD [SG]) 5 August 2021 (2021-08-05) <br> * paragraphs [0002] – [0005] * <br> * paragraphs [0012] – [0028] * <br> * figure 1 * <br> ----- | 1,10-15 | ADD. <br> G01S7/497 |
| A | EP 3 745 092 A2 (MILWAUKEE ELECTRONICS CORP [US]) 2 December 2020 (2020-12-02) <br> * the whole document * <br> ----- | 1-15 | |
| A | EP 3 742 193 A1 (TRUMPF PHOTONIC COMPONENTS GMBH [DE]; BOSCH GMBH ROBERT [DE]) 25 November 2020 (2020-11-25) <br> * the whole document * <br> ----- | 1-15 | |

TECHNICAL FIELDS
SEARCHED (IPC)

G01S

The present search report has been drawn up for all claims

| Place of search | Date of completion of the search | Examiner |
|---|---|---|
| Munich | 19 May 2023 | Hirsch, Stefanie |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 3990

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2023

| Patent document cited in search report | | Publication date | Patent family member(s) | | Publication date |
|---|---|---|---|---|---|
| US 2020033475 | A1 | 30-01-2020 | CN | 110779681 A | 11-02-2020 |
| | | | DE | 102019005060 A1 | 30-01-2020 |
| | | | JP | 6813541 B2 | 13-01-2021 |
| | | | JP | 2020016577 A | 30-01-2020 |
| | | | US | 2020033475 A1 | 30-01-2020 |
| DE 112019005749 T5 | | 05-08-2021 | CN | 113039457 A | 25-06-2021 |
| | | | DE | 112019005749 T5 | 05-08-2021 |
| | | | US | 2021405158 A1 | 30-12-2021 |
| | | | WO | 2020101576 A1 | 22-05-2020 |
| EP 3745092 | A2 | 02-12-2020 | EP | 3745092 A2 | 02-12-2020 |
| | | | US | 2020379110 A1 | 03-12-2020 |
| EP 3742193 | A1 | 25-11-2020 | CN | 113874749 A | 31-12-2021 |
| | | | DE | 112020002437 T5 | 03-02-2022 |
| | | | EP | 3742193 A1 | 25-11-2020 |
| | | | US | 2022075042 A1 | 10-03-2022 |
| | | | WO | 2020233927 A1 | 26-11-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021065998 A1
- US 9772399 B2
- US 20210223374 A1
- US 11061121 B2
- EP 3914932 A1
- CN 111429400 B